# EUROPÄISCHE PATENTANMELDUNG

(11) **EP 3 418 250 A1**
(43) Veröffentlichungstag der Anmeldung: **26.12.2018**
(21) Anmeldenummer: 17177432.6
(22) Anmeldetag: 22.06.2017
(51) Int. Cl.: B67D 3/04

(54) **VERSCHLUSS UND ZAPFHAHN FÜR EINEN GETRÄNKEBEHÄLTER**

(71) Anmelder: OAM GmbH, 69259 Wilhelmsfeld (DE)
(72) Erfinder: Oberhofer, Timm, 69259 Wilhelmsfeld (DE)
(74) Vertreter: Patent- und Rechtsanwälte Ullrich & Naumann

(57) **Zusammenfassung**

Ein Verschluss für einen Getränkebehälter, vorzugsweise für ein Bierfass, insbesondere für ein 5L-Party-Bierfass, mit einem durch eine Öffnung in der Wand des Behälters in diesen hinein ragenden Verschlusskörper aus spritzgusstechnisch hergestelltem Kunststoff, wobei der Verschlusskörper einen Scavenger enthält, der bei der Herstellung dem zu spritzenden Kunststoffgranulat beigemengt wird, dadurch gekennzeichnet, dass der Verschlusskörper zur Vergrößerung der Wirkfläche mit oberflächenvergrößernden Strukturen ausgestattet ist.

## Beschreibung

Die vorliegende Erfindung betrifft einen Verschluss für einen Getränkebehälter, vorzugsweise für ein Bierfass, insbesondere für ein 5L-Party-Bierfass, mit einem durch eine Öffnung in der Wand des Behälters in diesen hinein ragenden Verschlusskörper aus spritzgusstechnisch hergestelltem Kunststoff, wobei der Verschlusskörper einen Scavenger enthält, der bei der Herstellung dem zu spritzenden Kunststoffgranulat beigemengt wird.

Die Erfindung betrifft ganz allgemein einen Verschluss für einen Getränkebehälter, bspw. für ein Bierfass. Dabei geht es ganz überwiegend um kleinere Bierfässer, bspw. um sogenannte Partyfässer mit einem Volumen von fünf Litern. Solche Partyfässer sind regelmäßig aus Weißblech gefertigt.

In solchen Partyfässern werden fünf Liter Bier zur Verfügung gestellt, möglichst mit einer langen Haltbarkeit, über große Transportstrecken mit unterschiedlichsten Klimabedingungen hinweg. Solche Partyfässer sind hinlänglich aus der Praxis bekannt. Es gibt solche Fässer mit integrierter CO₂-Patrone zum Ausbringen des Bieres. Einfacher in der Konstruktion, aber auch einfach in der Handhabung, sind Bierfässer, bei denen das Bier durch Schwerkraft ausbringbar ist, nämlich durch einen tiefliegenden, integrierten Zapfhahn hindurch. Damit Luft von oben nachströmen kann, nämlich zur Vermeidung von Unterdruck im Fass, ist ein belüftbarer Stopfen vorgesehen. Durch die Öffnung, die der Stopfen verschließt, wird das Fass belüftet.

Es ist bereits erkannt worden, dass im Behälter bzw. Bierfass befindlicher bzw. hinein diffundierender oder sonst wie gelangender Sauerstoff zu Oxidationen führt, wodurch die Haltbarkeit des Getränks bzw. des Bieres stark reduziert wird. Bei Bier stellt sich sehr schnell eine Geschmacksveränderung ein.

Aus der DE 21 2005 000 063 U1 ist es bereits bekannt, das Material eines aus Kunststoff spritzgusstechnisch hergestellten Zapfhahns oder Stopfens mit einem Scavenger zu dotieren, wobei es sich dabei im Konkreten um einen Sauerstoff-Scavenger handelt, der den im Behälter befindlichen Sauerstoff bindet. Entsprechend dem Gewichtsanteil des Scavengers wirkt dieser über Wochen und Monate hinweg, vor allem auch in Bezug auf durch den Verschlusskörper hindurch diffundierenden oder sonst wie in den Behälter gelangenden Sauerstoff.

Durch Anwesenheit des Scavengers lässt somit die Haltbarkeit des im Partyfass befindlichen Getränkes (beispielsweise Bier) verlängern, vor allem lässt sich vermeiden, dass frühzeitig eine Geschmacksveränderung des Getränkes bis hin zu dem typischen "Alterungsgeschmack" stattfindet. Im Behälter befindlicher Sauerstoff und nach dem Befüllen in den Behälter schleichender oder diffundierender Sauerstoff wird durch den Sauerstoff-Scavenger gebunden, wobei der Scavenger als Reaktionspartner für den Sauerstoff zu verstehen ist. Über die Aufbewahrungsdauer hinweg wird der im Material des Verschlusskörpers befindliche Scavenger nach und nach "verbraucht", nämlich dadurch, dass der Sauerstoff an den Scavenger gebunden wird.

Zum Stand der Technik in Bezug auf einen solchen Scavenger sei lediglich beispielhaft auf die US 4,188,457 A und WO 00/56526 A1 verwiesen, die bereits für sich gesehen Verschlüsse aus Kunststoff mit dotiertem Scavenger offenbaren.

Scavenger können aus unterschiedlichsten Substanzen bestehen, bspw. auf der Basis von Metallsalzen, Ascorbinsäuren, Glucose, etc. Wenn hier ganz allgemein von einem "Scavenger" die Rede ist, dann ist ein Sauerstoff-Scavenger gemeint, ganz gleich welcher Zusammensetzung. Es geht hier also um das Einbinden eines Sauerstoff-Scavengers in Kunststoffteile, die spritzgusstechnisch gefertigt werden. Entsprechend wird ein Scavenger-Granulat dem zu spritzenden Kunststoffgranulat beigemengt, so dass die Dosierung in-situ spritzgusstechnisch erzeugt wird. Man kann hier von einer Dotierung mit Scavenger-Granulat sprechen.

In der Praxis hat sich jedoch herausgestellt, dass mit Scavenger dotierte Verschlusskörper zwar eine Wirkung entfalten, dass diese Wirkung jedoch oft nicht ausreicht, jedenfalls dann nicht, wenn es um lange Lagerungszeiten und/oder einen Transport in Länder mit hoher Luftfeuchtigkeit und hohen Temperaturen geht.

Der vorliegenden Erfindung liegt daher die Aufgabe zugrunde, einen Verschluss für einen Getränkebehälter, vorzugsweise für ein Bierfass, insbesondere für ein 5L-Bierfass, anzugeben, bei dem der Scavenger eine verbesserte Wirkung entfalten kann, um die Haltbarkeit des Getränks bzw. des Bieres zu begünstigen. Außerdem soll ein Verschluss angegeben werden, der sich von wettbewerblichen Produkten durch verbesserte Wirkung des Scavengers unterscheidet.

Voranstehende Aufgabe ist durch die Merkmale des Anspruches 1 gelöst. Danach ist der Verschlusskörper zur Vergrößerung der Scavenger-Wirkfläche mit oberflächenvergrößernden Strukturen ausgestattet, so dass dem in den Kunststoff dotierten Scavenger aufgrund der größeren Oberfläche des Verschlusskörpers eine größere Wirkfläche zur Verfügung steht. Dies bedeutet, dass aufgrund der Strukturen bei gleicher Dotierung eine verbesserte Wirkung des Scavengers gegenüber herkömmlichen Verschlusskörpern vorliegt, da dieser seine Wirkung gegenüber dem Sauerstoff besser entfalten kann.

Erfindungsgemäß ist erkannt worden, dass es keinen Sinn macht, zur Wirkungssteigerung des Scavengers dessen Gewichtsanteil im Kunststoffkörper zu erhöhen. Würde man dies tun, hätte der Scavenger zwar eine größere bzw. länger anhaltende Wirkung, jedoch würde man den Verschlusskörper durch Erhöhung des Dotierungsanteils in seiner Festigkeit schwächen. Außerdem ist die Dotierung mit dem Scavenger, entsprechend dem Gewichtsanteil, mit nicht unerheblichen Kosten verbunden. Wesentlicher Aspekt ist jedoch, dass man keine Schwächung des Verschlusskörpers herbeiführen möchte.

Die Erfindung lehrt eine bewusste Vergrößerung der Wirkfläche, d. h. der Oberfläche des Verschlusskörpers dadurch, dass diese mit oberflächenvergrößernden Strukturen ausgestattet ist. Die gesamte Dimensionierung des Verschlusskörpers muss dabei so ausgelegt sein, dass die oberflächenvergrößernden Strukturen die Funktion des Verschlusskörpers nicht behindern, insbesondere in Bezug auf den Einbau des Verschlusskörpers von außen durch ein Öffnen hindurch abdichtend gegenüber der Wand des Getränkebehälters.

Ganz im Gegenteil ist es denkbar, dass die oberflächenvergrößernden Strukturen so ausgeführt sind, dass sie beim Einschieben bzw. Einstecken des Verschlusskörpers eine Art Führungsaufgabe übernehmen, um den Einbau des Verschlusskörpers zu begünstigen.

Die oberflächenvergrößernden Strukturen können beliebig ausgeführt sein, nämlich durch Wegnahme von Material in Form von Ausnehmungen, Aussparungen, Einkerbungen, etc. Auch ist es denkbar, die Vergrößerung der Wirkfläche durch eine erhöhte Oberflächenrauigkeit zu erzielen, wodurch die Wirkung des Scavengers ebenfalls begünstigt wird. Auch ist es denkbar, die Außenfläche des Verschlusskörpers mit Noppen, Rippen, Stegen oder dergleichen auszuführen, wobei deren Ausgestaltung das Ausformen bzw. den Auswurf des Verschlusskörpers nach dem Spritzguss nicht behindern darf.

In weiter vorteilhafter Weise sind die Strukturen derart ausgebildet und angeordnet, dass sie neben ihrem oberflächenvergrößernden Effekt zur Materialreduktion beitragen, nämlich dadurch, dass Ausnehmungen, Einkerbungen, etc. vorgesehen sind, die sich regelmäßig oder unregelmäßig über die Oberfläche des Verschlusskörpers hinweg wiederholen. Zwischen den Ausnehmungen/Aussparungen können stabilisierende Rippen oder Stege vorgesehen sein, die wiederum die Festigkeit bzw. Stabilität des Verschlusskörpers begünstigen. So lässt sich mit weniger Material ein hinreichend stabiler Verschlusskörper generieren, bei dem die Wirkfläche gegenüber einem an der Oberfläche mehr oder weniger glatten Verschlusskörper ganz erheblich erhöht ist.

An dieser Stelle sei angemerkt, dass sich die oberflächenvergrößernden Strukturen über die gesamte Oberfläche des Verschlusskörpers hinweg erstecken können, bspw. entlang einer umlaufenden Mantelfläche einerseits und auch entlang bzw. auf einer endeseitigen Stirnfläche. Je mehr die Oberfläche aufgrund dieser Maßnahmen hinzukommt, desto besser ist die Wirkung des Scavengers.

Ein Partyfass der zuvor genannten Art hat regelmäßig zwei Verschlusskörper, nämlich auf der oberen Stirnfläche einen Verschlussstopfen, der eine Einfüllöffnung nach dem Befüllen des Bierfasses schließt. Dieser Verschlussstopfen ist öffenbar und dient zur Belüftung des Fasses beim Zapfen des Bieres durch eine untere Öffnung hindurch. Die untere Öffnung ist durch einen integrierten Zapfhahn geschlossen, der ebenfalls als Verschlusskörper zu verstehen ist. Um diesen Zapfhahn, als besondere Ausführung eines Verschlusskörpers, geht es nachfolgend.

Im Konkreten kann der Zapfhahn dreiteilig ausgeführt sein und kann dabei eine einseitig geschlossene Hülse mit Einströmöffnung aufweisen. Mit dieser Hülse erstreckt sich der Zapfhahn durch eine untere Öffnung des Bierfasses hindurch in das Bierfass hinein. Die Hülse kann in ihrer Mantelfläche, bspw. etwa mittig der Gesamtlänge, die Einströmöffnung haben, durch die hindurch das Bier strömen kann. Die Hülse liegt im komplett eingesteckten Zustand mit einem Kragen bzw. Flansch außen an der Wand des Bierfasses an. Von innen hintergreift die Hülse die Öffnung des Bierfasses mit einem abdichtenden Flansch, wobei der Rand der Öffnung des Fasses bei der Montage der Hülse in einen Hinterschnitt gedrückt wird. Die Hülse sitzt somit abdichtend und fest in der unteren Öffnung des Bierfasses.

In die Hülse hinein ist ein Kolben gesteckt, der einen vorzugsweise inneren Strömungskanal aufweist. Durch die Einströmöffnung der Hülse und den Strömungskanal des Kolbens hindurch kann das Bier nach außen strömen, wobei sich an den Strömungskanal des Kolbens ein Griff mit Auslauf und integriertem Auslaufkanal anschließt.

Zur Betätigung des Zapfhahns lässt sich der Kolben an dem sich anschließenden Griff um eine vorgegebene Strecke aus der Hülse herausziehen und zum Öffnen des Auslaufs schwenken oder drehen.

An dieser Stelle sei angemerkt, dass ein integriertes Frischesiegel vorgesehen sein kann, welches beim erstmaligen Öffnen des Zapfhahns zerstört wird. Bei dem Frischesiegel kann es sich um eine bei der Herstellung angespritzte Komponente handeln, wobei ein Teil des Frischesiegels der Hülse und ein anderer Teil dem Kolben und/oder dem Griff zugeordnet sein kann, nämlich im Wege einer mechanischen Wirkverbindung, die beim erstmaligen Öffnung bricht bzw. reißt.

Der Außenseite der Hülse, vorzugsweise im Bereich eines zur Anlage an der Wand des Behälters dienenden Kragens oder Flanschs, können Dichtmittel zugeordnet sein, die gegenüber der Innenwand und/oder der Außenwand des Behälters wirken. Diese Dichtmittel werden spritzgusstechnisch erzeugt. In weiter vorteilhafter Weise kann der Innenseite der Hülse gegenüber dem Kolben und/oder der Außenseite des Kolbens gegenüber der Hülse wirkende Dichtmittel zugeordnet sein, die ebenfalls, gemeinsam mit dem eigentlichen Spritzgussteil durch zweikomponentiges Spritzen oder im Overmolding-Verfahren erzeugt werden. Solche Dichtmittel sind insbesondere im Bereich der Einströmöffnung der Hülse am innenliegenden Kolben von Bedeutung, so dass ein sicheres Öffnen und Verschließen der Einströmöffnung möglich ist.

Wesentlich ist jedenfalls, dass der in der Hülse axial verlagerbare und ggf. drehbare Kolben in sämtlichen Wirkpositionen gegenüber der Innenwandung der Hülse abdichtet, einmal zum Unterbrechen des Strömungspfads und ein anderes Mal zur Bewerkstelligung des Strömungspfads durch die Einströmöffnung und den Strömungskanal im Kolben bis hin zum Auslauf.

Durch Schwenken des Griffs lässt sich der Auslauf öffnen und schließen, wodurch ein einfaches Betätigen des Zapfhahns möglich ist, wohlgemerkt erst dann, wenn der Kolben von der komplett innenliegenden Schließposition in seine zumindest geringfügig nach außen verlagerte Betriebsposition gezogen ist.

Wie bereits zuvor angedeutet, sind die Komponenten der zuvor erörterten Teile des Zapfhahns, inklusive der angeformten Dichtmittel, als Zweikomponenten-Spritzgussteile mit härteren Komponenten und weicheren Komponenten (Dichtmittel) ausgeführt. Die härteren Komponenten, aus denen die Hülse, der Kolben und der Griff mit Auslauf hergestellt sind, sind in vorteilhafter Weise aus Polypropylen (PE) gefertigt. Die weicheren Komponenten bestehen aus thermoplastischen Elastomeren (TPE). Die thermoplastischen Elastomere haben den großen Vorteil, dass sie sich unter Wärmezufuhr plastisch verformen lassen, somit spritzgusstechnisch verarbeitet werden können. Nach der Verarbeitung haben sie aufgrund ihrer besonderen Molekularstruktur gummielastische Eigenschaften, so dass sie sich in-situ-Dichtung bzw. angeformte Dichtungen in hervorragender Weise eignen.

Es ist bereits ausgeführt worden, dass der Verschlusskörper einen Scavenger enthält. Bei dem konkreten Ausführungsbeispiel eines Zapfhahns ist es von ganz besonderer Bedeutung, dass das Material der Hülse mit dem Scavenger dotiert ist. Auch ist es denkbar, dass der Kolben und/oder der Griff, vorzugsweise auch das Material der jeweiligen Dichtmittel, mit dem Scavenger dotiert ist/sind. Je mehr Scavenger-dotierte Oberflächen einem bspw. durch den Verschluss in den Behälter gelangenden Sauerstoff ausgesetzt sind, desto besser kann sich die Wirkung des Scavengers zum Binden des Sauerstoffs entfalten. Dies gilt erst recht, wenn die Wirkflächen durch oberflächenvergrößernde Strukturen vergrößert sind, wobei diese Strukturen ganz überwiegend an der Oberfläche der Hülse ausgebildet sind.

Auch ist es denkbar, dass solche Strukturen unter Berücksichtigung abdichtender Maßnahmen - ergänzend - an Innenseiten der jeweiligen Bauteile ausgebildet sind, überall dort, wo Sauerstoff hinein diffundieren oder sonst wie gelangen kann. Davon kann auch der gesamte Strömungspfad durch den Zapfhahn hindurch betroffen sein, wobei solche Strukturen unter Berücksichtigung der spritzgusstechnischen Fertigung, insbesondere in Bezug auf das Entformen eines möglichst einfachen Werkzeugs, möglich sind.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Party-Bierfass mit zwei Verschlusskörpern - Stopfen und Zapfhahn - im geschlossenen, abdichtenden Zustand.
- Fig. 2a bis Fig. 2c: in schematischen Ansichten das Bierfass aus Fig. 1, wobei dort Stopfen und der Zapfhahn jeweils geöffnet sind.
- Fig. 3: in einer schematischen Ansicht, perspektivisch, den Zapfhahn des Bierfasses aus den Fig. 1 und 2 im zusammengebauten Zustand,
- Fig. 4: in einer schematischen Explosionszeichnung, perspektivisch, den Zapfhahn aus Fig. 3.
- Fig. 5: den Gegenstand aus Fig. 4, jedoch von der Seite her gesehen.

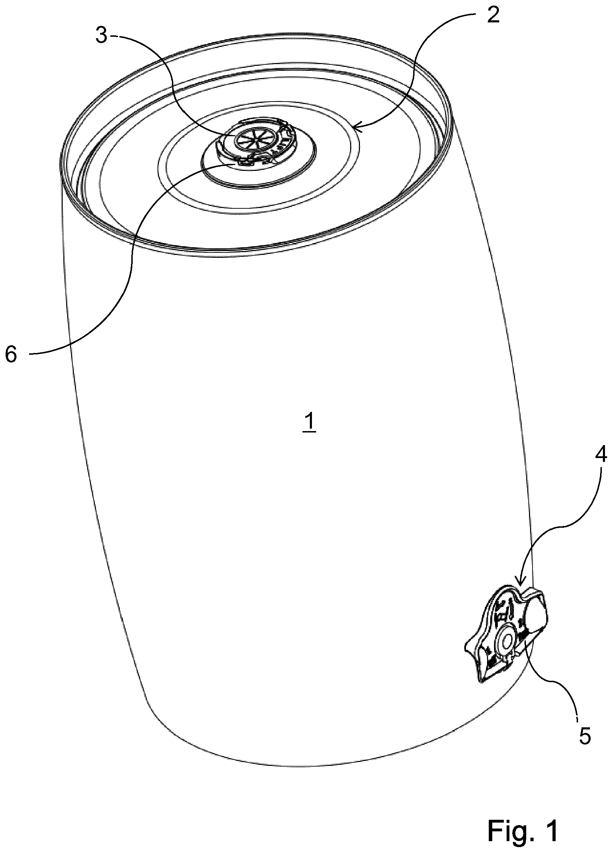

Fig. 1 zeigt einen besonderen Getränkebehälter in Form eines Bierfasses 1, wobei dieses Bierfass 1 zwei Öffnungen aufweist. Eine obere Öffnung 2 dient zum Einfüllen des Bieres, wobei diese Öffnung 2 durch einen Stopfen 3 nach dem Befüllen mit Bier verschlossen wird.

Eine untere Öffnung 4 dient zum Ausbringen bzw. Zapfen des Bieres, wobei auch diese untere Öffnung 4 zum Transport und zur Lagerung des Bierfasses 1 durch einen Verschluss geschlossen ist. Bei diesem Verschluss handelt es sich um einen integrierten Zapfhahn 5. Dieser Zapfhahn 5 befindet sich im geschlossenen Zustand in seiner abdichtenden Verschlussposition. An einem Griff lässt sich ein Teil des Zapfhahnes herausziehen und lässt sich der Griff zum Öffnen und Schließen des Zapfhahns schwenken bzw. neigen.

Fig. 1 zeigt die beiden Verschlusskörper - Stopfen 3 und Zapfhahn 5 - in der jeweils geschlossenen Position.

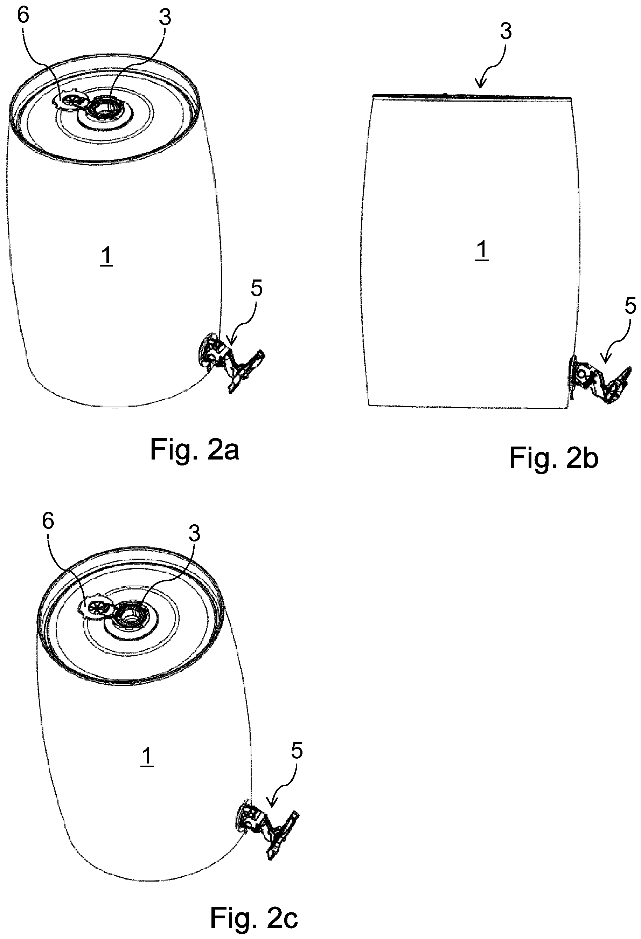

Fig. 2 zeigt das Bierfass 1 aus Fig. 1, wobei sich dort die beiden Verschlusskörper-Stopfen 3 und Zapfhahn 5 - in der geöffneten Position befinden.

Der Stopfen 3 ist zum Belüften des Bierfasses 1 geöffnet, wobei die Öffnung des Stopfens 3 durch Öffnen eines Deckels 6 erfolgt. Der Deckel 6 ist im Sinne einer Klappe wegschwenkbar. Eine Belüftung des Innenraums des Bierfasses 1 kann in diesem Zustand erfolgen, nämlich entsprechend der gezapften Menge an Flüssigkeit an Bier.

Der untere Verschlusskörper, nämlich der Zapfhahn 5, ist in seiner Arbeitsposition teilweise aus dem Bierfass 1 herausgezogen. Das Herausziehen und Aktivieren erfolgt anhand eines Griffs, der zum Öffnen und Schließen des Zapfhahns 5 schwenkbar ist.

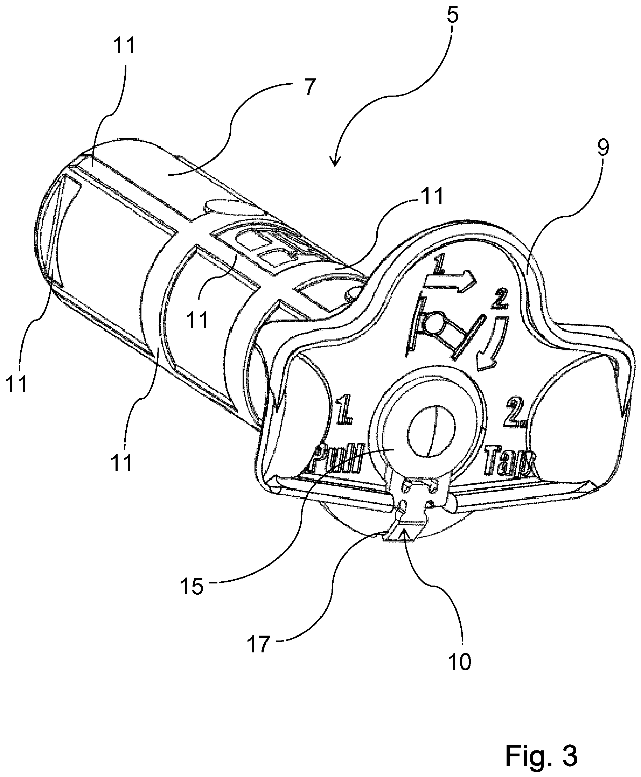

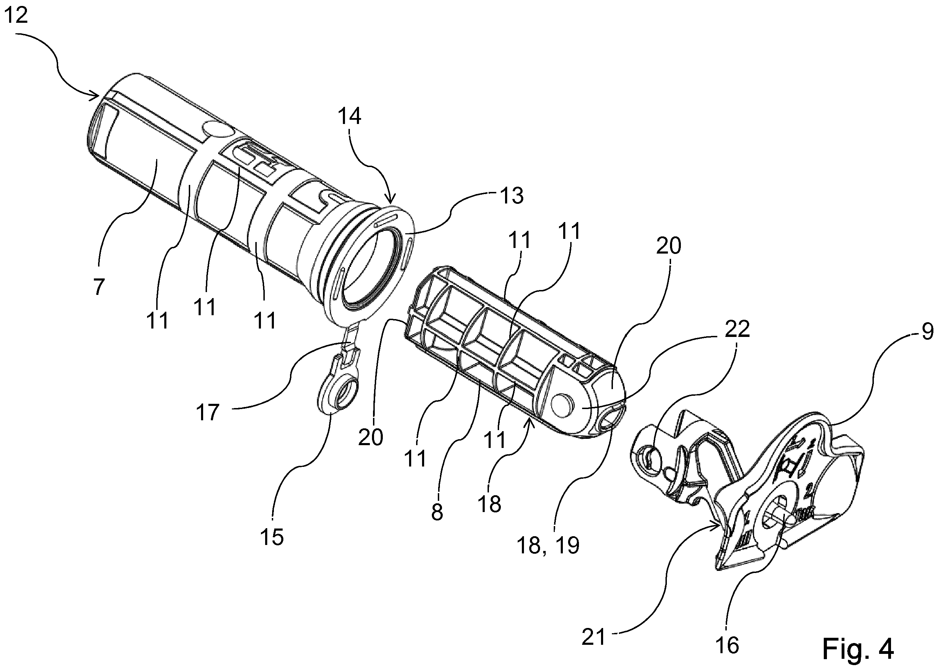

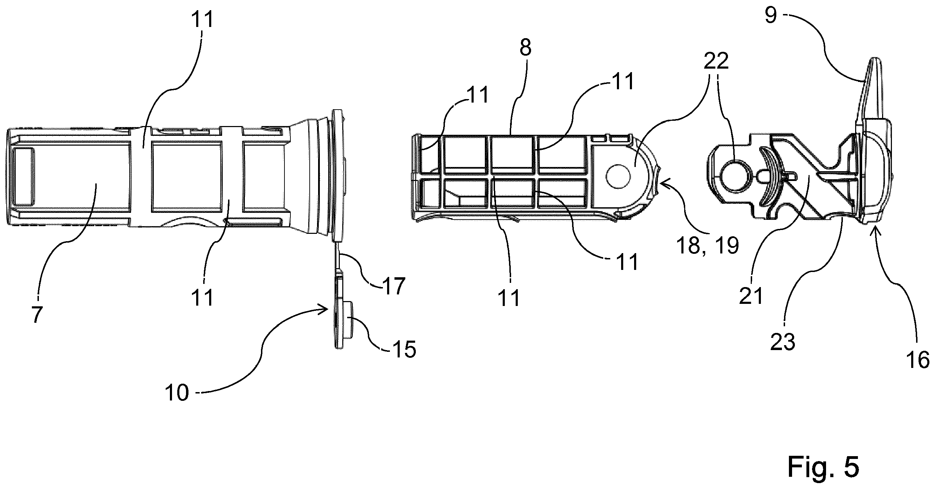

Die Fig. 3 bis 5 zeigen den Zapfhahn 5 im zusammengebauten Zustand (Fig. 3) und im Rahmen einer Explosionszeichnung mit den drei spritzgusstechnisch hergestellten Funktionsteilen (Fig. 4 und 5).

Fig. 3 zeigt den Zapfhahn 5 im zusammengebauten Zustand, wobei die äußere Hülse 7 erkennbar ist. Innerhalb der Hülse 7 befindet sich ein in Fig. 3 nicht erkennbarer Kolben 8, der sich einerseits in der Hülse 7 drehen und andererseits in der Hülse 7 axial verlagern lässt, nämlich von seiner abdichtenden inneren Schließposition in die ebenfalls abdichtende äußere Betriebsposition.

An den Kolben 8 schließt sich nach außen hin ein Griff 9 an, der ein Frischesiegel 10 hat, welches eine mechanische Wirkverbindung zwischen dem Griff 9 und der Hülse 7 bildet. Beim erstmaligen Betätigen bzw. beim Herausziehen des Kolbens 8 in die Arbeitsposition wird die Wirkverbindung zerstört und ist das einmalige Öffnen erkennbar.

An der Oberfläche der Hülse 7 sind die erfindungsgemäßen oberflächenvergrößernden Strukturen 11 erkennbar, die einerseits die Wirkfläche für den dotierten Scavenger vergrößern und andererseits für Stabilität sorgen. Zur Vermeidung von Wiederholungen wird zu den Ausgestaltungsmöglichkeiten der Strukturen 11 auf den allgemeinen Teil der Beschreibung verwiesen.

Fig. 4 zeigt die drei Bauteile des Zapfhahns 5 in einer Explosionsdarstellung.

Die Hülse 7 ist an der Oberfläche mit den Strukturen 11 ausgestattet, so dass die Wirkung des Scavengers gegenüber einer glatten Oberfläche - bewusst - vergrößert ist. Dabei ist wesentlich, dass sich die Strukturen 11 über die gesamten Oberfläche der Hülse 7 hinweg erstrecken, um eine möglichst große Oberflächenvergrößerung zu erzielen.

Die Hülse 7 hat eine geschlossene Stirnfläche 12, die in Fig. 4 durch das Bezugszeichen angedeutet ist. Diese Stirnfläche 12 kann ebenfalls mit Strukturen ausgestattet sein. Die Strukturen der Stirnfläche sind in Fig. 4 nicht erkennbar.

Am anderen Ende hat die Hülse 7 einen Flansch 13, mit dem die Hülse 7 von außen an der unteren Öffnung 4 des Bierfasses 1 abdichtend anliegt. Angespritzte Dichtmittel 14 sind vorgesehen.

Fig. 4 lässt des Weiteren erkennen, dass das Frischesiegel 10 an den Flansch 13 der Hülse 7 angeformt ist. Bei der Montage wird ein Kopf 15 in eine Aufnahme 16 auf der Vorderseite des Griffs 9 geklipst. Die Wirkverbindung 17, in Form eines Stegs, wird beim Herausziehen des Kolbens 8 in seine Arbeitsstellung zerstört, so dass eine erstmalige Inbetriebnahme erkennbar ist. Der Kolben 8 hat auf seiner Oberfläche ebenfalls oberflächenvergrößernde Strukturen 11, die teilweise als Ausnehmungen und teilweise als stabilisierende Rippen ausgeführt sind. Auch hier kann sich der dotierte Scavenger ganz besonders in seiner Wirkung entfalten. Der Kolben 8 hat einen inneren Strömungskanal 18, der über eine Öffnung 19 in den Griff 20 mit Auslauf 21 mündet. Zwischen den jeweiligen Bauteilen wirken angeformte Dichtmittel.

Fig. 5 zeigt den Gegenstand aus Fig. 4 in einer schematischen Seitenansicht, wobei auch hier die Hülse 7 mit dem angeformten Frischesiegel 10 mit Kopf 15 und dem verbindenden Steg 17 zu erkennen ist.

Der Kolben 8 hat den inneren Strömungskanal 18 und die Öffnung 19. Die oberflächenvergrößernden Strukturen 11 sind ebenfalls erkennbar.

Zwischen dem Kolben 8 und dem Griff 9 mit Auslauf 21 ist eine Gelenkverbindung 22 vorgesehen, wobei sich die beiden Bauteile 8 und 9 über zur Herstellung der Gelenkverbindung 22 miteinander verklipsen lassen.

Der Griff 9 umfasst den Auslauf 21, der eine nach unten gerichtete Öffnung 23 besitzt.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dienen, diese jedoch nicht auf das Ausführungsbeispiel einschränkt.

### Bezugszeichenliste

- 1: Bierfass, Behälter
- 2: obere Öffnung
- 3: Stopfen
- 4: untere Öffnung
- 5: Zapfhahn
- 6: Deckel des Stopfens
- 7: Hülse
- 8: Kolben
- 9: Griff
- 10: Frischesiegel
- 11: Strukturen
- 12: geschlossene Stirnfläche
- 13: Flansch (Hülse)
- 14: Dichtmittel
- 15: Kopf (Frischesiegel)
- 16: Aufnahme
- 17: Wirkverbindung, Steg
- 18: innerer Strömungskanal (Kolben)
- 19: Öffnung
- 20: Dichtmittel
- 21: Auslauf
- 22: Gelenkverbindung
- 23: Öffnung

## Patentansprüche

1. Verschluss für einen Getränkebehälter, vorzugsweise für ein Bierfass, insbesondere für ein 5L-Party-Bierfass, mit einem durch eine Öffnung in der Wand des Behälters in diesen hinein ragenden Verschlusskörper aus spritzgusstechnisch hergestelltem Kunststoff, wobei der Verschlusskörper einen Scavenger enthält, der bei der Herstellung dem zu spritzenden Kunststoffgranulat beigemengt wird, **dadurch gekennzeichnet, dass** der Verschlusskörper zur Vergrößerung der Wirkfläche mit oberflächenvergrößernden Strukturen ausgestattet ist.

2. Verschluss nach Anspruch 1, **dadurch gekennzeichnet, dass** die Strukturen als Ausnehmungen, Einkerbungen, Oberflächenrauigkeit, Noppen, Rippen, Stege oder dgl. ausgeführt sind.

3. Verschluss nach Anspruch 1 oder 2, **dadurch gekennzeichnet, dass** die Strukturen derart ausgebildet und angeordnet sind, dass sie neben ihrem oberflächenvergrößernden Effekt zur Materialreduktion und/oder zur Festigkeit bzw. Stabilität des Verschlusskörpers beitragen.

4. Verschluss nach einem der Ansprüche 1 bis 3, **dadurch gekennzeichnet, dass** der Verschlusskörper als Zapfhahn ausgeführt ist.

5. Verschluss nach einem der Ansprüche 1 bis 4, **dadurch gekennzeichnet, dass** der Zapfhahn eine endseitig geschlossene Hülse mit Einströmöffnung, einen von der Hülse aufgenommenen Kolben mit vorzugsweise innerem Strömungskanal und einen sich vorzugsweise schwenkbar an den Kolben und an den Strömungskanal des Kolbens anschließenden Griff mit Auslauf umfasst, wobei die Hülse bis auf einen Dichtkragen oder Dichtflansch in den Behälter abdichtend eingesteckt ist und wobei zur Betätigung des Zapfhahns der Kolben am Griff um eine vorgegebene Strecke aus der Hülse herausziehbar und zum Öffnen des Auslaufs schwenkbar oder drehbar ist.

6. Verschluss nach Anspruch 5, **dadurch gekennzeichnet, dass** der Außenseite der Hülse, vorzugsweise im Bereich eines zur Anlage an der Wand des Behälters dienenden Kragens oder Flanschs, gegenüber der Wand des Behälters wirkende Dichtmittel zugeordnet sind.

7. Verschluss nach Anspruch 5 oder 6, **dadurch gekennzeichnet, dass** der Innenseite der Hülse gegenüber dem Kolben und/oder der Außenseite des Kolbens gegenüber der Hülse wirkende Dichtmittel zugeordnet sind.

8. Verschluss nach einem der Ansprüche 5 bis 7 **dadurch gekennzeichnet, dass** die Komponenten der einzelnen Teile, inklusive der Dichtmittel, als Zweikomponenten Spritzgussteile mit härteren Komponenten und weicheren Komponenten (Dichtmittel) ausgeführt sind.

9. Verschluss nach einem der Ansprüche 5 bis 8 , **dadurch gekennzeichnet, dass** die härteren Komponenten aus Polypropylen (PE) und die weicheren Komponenten aus thermoplastischen Polymeren (TPE) hergestellt sind.

10. Verschluss nach einem der Ansprüche 5 bis 9, **dadurch gekennzeichnet, dass** das Material der Hülse und ggf. des Kolbens und/oder des Griffs, vorzugsweise auch das Material der jeweiligen Dichtmittel, mit dem Scavenger dotiert ist.

11. Verschluss nach einem der Ansprüche 1 bis 10, **dadurch gekennzeichnet, dass** die Dotierung mit dem Scavenger im Bereich von 7 bis 30 Gew-% , vorzugsweise bei etwa 15 Gew.-% liegt.

12. Verschluss nach einem der Ansprüche 1 bis 11, **dadurch gekennzeichnet, dass** die Strukturen ganz überwiegend an der Oberfläche der Hülse ausgebildet sind.
